(19) Europäisches Patentamt
European Patent Office
Office européen des brevets

(11) **EP 2 165 983 B1**

(12) **EUROPÄISCHE PATENTSCHRIFT**

(45) Veröffentlichungstag und Bekanntmachung des Hinweises auf die Patenterteilung:
**24.07.2013  Patentblatt 2013/30**

(21) Anmeldenummer: **09011650.0**

(22) Anmeldetag: **11.09.2009**

(51) Int Cl.:
*C03B 7/086* *(2006.01)*   *C03B 9/195* *(2006.01)*
*C03B 9/22* *(2006.01)*   *C03B 11/02* *(2006.01)*

(54) **Glasmaschine mit Direktantrieb**

Glass machine with direct drive

Machine de fabrication de verre dotée d'un entraînement direct

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **12.09.2008  EP 08016113**

(43) Veröffentlichungstag der Anmeldung:
**24.03.2010  Patentblatt 2010/12**

(73) Patentinhaber: **Waltec Maschinen GmbH**
**96352 Wilhelmsthal-Steinberg (DE)**

(72) Erfinder:
 • **Rose, Dieter**
 **96328 Küps (DE)**
 • **Bassing, Werner**
 **96364 Marktrodach (DE)**

(74) Vertreter: **Köhler, Walter et al**
**Louis, Pöhlau, Lohrentz**
**Patentanwälte**
**Postfach 30 55**
**90014 Nürnberg (DE)**

(56) Entgegenhaltungen:
EP-B- 1 037 859   WO-A-00/39037
DE-A1- 1 488 604   GB-A- 800 613
GB-A- 2 312 338   US-A- 4 494 030
US-A- 5 015 903

EP 2 165 983 B1

**Beschreibung**

Die Erfindung betrifft eine Glasmaschine mit Direktantrieb nach dem Oberbegriff des Anspruchs 1.

Unter Glasmaschinen werden hier Maschinen verstanden, die dafür vorgesehen sind, aus Glasschmelzen gebildete Glasprodukte, wie Flaschen, Trinkgläser und dergleichen herzustellen. Glasmaschinen sind also Maschinen, in denen Glasschmelze gehandhabt wird, indem Glasschmelze aus einem Glasschmelzebehälter dosiert abgezogen wird und/oder in eine Glasform eingeführt wird. Es handelt sich um Glasschmelze-Zuführund/oder -Formmaschinen.

Glasmaschinen, wie Glas-Feeder oder Drehtische, werden herkömmlich mit Elektromotoren angetrieben, die über ein Zwischengetriebe mit der Glasmaschine verbunden sind. Das Zwischengetriebe weist mechanische Verluste auf und erhöht damit den Energiebedarf zum Betrieb der Glasmaschine und ist infolge der rauen Umgebungsbedingungen einem erhöhten Verschleiß unterworfen.

Es sind Glasmaschinen mit direktem Antrieb bekannt, wobei jedoch wegen des direkten Antriebes die zum Antrieb vorgesehenen elektrischen Motoren Sonderanfertigungen sind, Die EP 1037859 B1 beschreibt einen Glas-Feeder mit elektrischem Linearmotor, die WO 00/39037 beschreibt einen Drehtisch.

Aufgabe der vorliegenden Erfindung ist es, eine Glasmaschine mit einem verbesserten Direktantrieb anzugeben.

Erfindungsgemäß wird diese Aufgabe mit dem Gegenstand des Anspruchs 1 gelöst. Es wird eine Glasmaschine mit einer Glasschmelzezufuhrvorrichtung, vorzugsweise Glas-Feeder genannt, mit einem Glasschmelzebehälter mit einer Ausgangsöffnung und einem durch diese auf- und abbewegten Kolben, vorzugsweise Plunger genannt, vorgeschlagen, wobei der Kolben mit einem elektrischen Antriebsmotor verbunden ist und ggf. ein Drehtisch mit Glasformen oder anderen Bearbeitungsvorrichtungen unmittelbar oder mittelbar dem Glasschmelzebehälter nachgeschaltet ist, wobei dieser Drehtisch zur Drehbewegung mit einem elektrischen Antriebsmotor verbunden ist, wobei vorgesehen ist, dass der elektrische Antriebsmotor des Kolbens und/oder des Drehtischs als Direktantrieb ausgebildet ist, wobei vorgesehen ist, dass der Stator des elektrischen Antriebsmotors aus mindestens einem Statorsegment gebildet ist, das einen weichmagnetischen Kern und eine oder mehrere in Nuten angeordnete Spulenwicklungen aufweist, dass der Kern mindestens ein parallel zu den Nuten angeordnetes Durchgangsloch aufweist, das von einer Kühleinrichtung durchgriffen ist, die als durchströmter und/oder umströmter Körper ausgebildet ist und einen Abschnitt eines von einem Kühlmittel durchströmten Wärmetauschers bildet, dass die Kühleinrichtung eine Fixierungseinrichtung für den Kern darstellt, und dass der Kern Spulenkerne aufweist, die durch die Nuten voneinander getrennt sind, wobei der Abstand zum äußeren Rand des mindestens einen Durchgangsloches von der Fußpunktlinie der Nuten im Bereich der 0,2fachen bis 10fachen Breite der Spulenkerne liegt. Bei bevorzugten Ausführungen ist vorgesehen, dass der Abstand in einem Bereich von 0,5 bis 2 liegt, besonders bevorzugt sind Ausführungen bei 0,8 bis 1.

Ein konstruktiv einfacher Aufbau bei guter Kühlwirkung wird mit Ausführungen erhalten, bei denen der Kern n Spulenkerne und m Durchgangslöcher mit Kühleinrichtung aufweist, wobei n größer oder gleich m ist. Besonders vorteilhafte Ausführungen ergeben sich, wenn das Verhältnis von n zu m in einem Bereich von 2 bis 1, vorzugsweise bei 1,5 liegt. Bei bevorzugten Ausführungen ist vorgesehen, dass die Querschnittsfläche des Durchgangsloches einen Durchmesser aufweist, der gleich ist wie die Breite des Spulenkerns oder maximal 50 % größer oder kleiner ist als die Breite des Spulenkerns.

Es wird also eine Glasmaschine mit einem elektrischen Motor vorgeschlagen, dessen Stator aus einzelnen Segmenten ausgebildet ist, die gleichartig aufgebaut sind und über eine integrierte Kühlung verfügen. Damit ist es möglich, mit einem Segmentprinzip elektrische Motoren aufzubauen, die sich hinsichtlich ihrer Leistung, ihrer Bauform und ihrer Verwendung unterscheiden. Ein weiterer Vorteil ist, dass der weichmagnetische Kern durch den bzw. die Kühleinrichtungen so stabilisiert ist, dass keine zusätzlichen Stützelemente benötigt sind. Diese Ausbildung erleichtert weiter sowohl die Montage als auch den Service des elektrischen Motors und damit auch der Glasmaschine. Die innerhalb des Kerns angeordneten Kühleinrichtungen sind unmittelbar an der Wärmequelle angeordnet und leiten daher besonders effektiv die Kemwärme ab.

Der durchströmte und/oder umströmte Körper kann als ein rohrförmiger durchströmter und/oder umströmter Körper oder als ein bolzenförmiger umströmter Körper ausgebildet sein.

Es kann vorgesehen sein, dass der Kern das Gehäuse des Statorsegments bildet. An dem Kern können weitere Elemente befestigt sein, beispielsweise elektrische Anschlussklemmen zum Anschluss der Spulenwicklungen.

Es kann weiter vorgesehen sein, dass der Kern auf der Kühleinrichtung durch Kraftschluss oder Stoffschluss fixiert ist.

Es kann weiter vorgesehen sein, dass die Mantelfläche der Kühleinrichtung mindestens abschnittsweise mit Übermaß zu dem korrespondierenden Innenmaß des Durchgangslochs ausgebildet ist.

Es kann weiter vorgesehen sein, dass der Teilungsabstand mindestens zweier Durchgangslöcher ungleich dem Teilungsabstand der mit den zwei Durchgangslöchern zusammenwirkenden Kühleinrichtungen ist. Es kann also vorgesehen sein, die Kühleinrichtungen in den Kern einzupressen und damit kraftschlüssig mit dem Kern zu verbinden. Der Teilungsabstand der Kühlkörper kann durch eine gemeinsame Grundplatte definiert sein, in der die Kühlkörper befestigt sind, beispielsweise durch Einpressen, Einkleben oder Einschrauben.

Es kann weiter vorgesehen sein, dass die Durchgangslöcher und/oder die Kühleinrichtungen einen variablen Teilungsabstand aufweisen. Die Variation des Teilungsabstandes kann im Bereich der üblichen Fertigungstoleranzen liegen, er kann aber auch so groß gewählt sein, dass durch die Anordnung der Kühleinrichtungen der Kern nur in einer Vorzugslage montierbar ist.

Die Kühleinrichtung kann einen beliebigen Querschnitt aufweisen, doch es können Querschnittsformen aus beispielsweise fertigungstechnischen oder funktionellen. Gründen bevorzugt sein.

Es kann vorgesehen sein, dass die Kühleinrichtung als rohrförmiger Kühlkörper ausgebildet ist. Der Begriff "rohrförmiger Kühlkörper" ist nicht auf konstante Wandstärke begrenzt, es fallen auch alle Kühlkörper darunter, deren äußeres Umfangsprofil von dem inneren Umfangsprofil verschieden ist, die also beispielsweise einen polygonalen Außenumfang und einen kreisförmigen Innenumfang aufweisen. Solche nahezu beliebig geformten Kühlkörper sind beispielsweise durch Strangpressen oder Stranggießen herstellbar. Es ist auch möglich, dass die Kühlkörper mehr als ein Durchgangsloch aufweisen.

Es kann vorgesehen sein, dass die Kühleinrichtung einen kreisförmigen oder elliptischen Umfang aufweist.

Es ist aber auch möglich, dass die Kühleinrichtung einen polygonalen oder sternförmigen Umfang aufweist.

Wenngleich die vorgenannten Umfangsausbildungen bevorzugt sein können, so ist es doch möglich, dass die Kühleinrichtung eine beliebige Umfangskontur aufweist, wobei die Innenkontur des mit der Kühleinrichtung gepaarten Durchgangslochs vorzugsweise so ausgebildet ist, dass der Wärmeübergang zwischen dem Kern und der Kühleinrichtung ausreichend hoch ist.

Wenn die Kühleinrichtung mit einem kreisförmigen Durchgangsloch gepaart ist, können zwischen der Innenwand des Durchgangslochs und der Außenwand der Kühleinrichtung ein oder mehrere Spalte ausgebildet sein. Es ist möglich, die Spalte mit einem wärmeleitfähigen und wärmebeständigen Kleber auszufüllen, so dass die Haftung und/oder die Wärmeleitung zwischen dem Kern und der Kühleinrichtung verbessern sind bzw. ist.

Es kann weiter vorgesehen sein, dass zwischen der Innenwand des Durchgangslochs und der Außenwand der Kühleinrichtung mindestens ein Durchströmungsraum für das Kühlmittel ausgebildet ist. Dieser mindestens eine Durchströmungsraum kann vorgesehen sein, wenn die Kühleinrichtung aus Vollmaterial ausgebildet ist. Der Querschnitt der Kühleinrichtung kann beispielsweise aus einem gleichschenkligen Dreieck oder einem Quadrat gebildet sein und das Durchgangsloch kann einen kreisförmigen Querschnitt aufweisen, wobei der Innendurchmesser des Durchgangslochs vorteilhafterweise so gewählt ist, dass die Kühleinrichtung linienförmig auf die Innenwand des Durchgangslochs gepresst ist. Auf diese Weise sind drei bzw. vier Durchströmungsräume für das Kühlmittel gebildet.

Die Kühleinrichtungen können in einer Serienschaltung und/oder in einer Parallelschaltung in den Kühlmittelkreislauf eingebunden sein.

Es kann vorgesehen sein, dass die Kühleinrichtungen eines Statorsegments in einer Serienschaltung betrieben werden und dass weiter die Statorsegmente in einer Serienschaltung in den Kühlmittelkreislauf eingebunden sind.

Es kann auch vorgesehen sein, dass die Kühleinrichtungen eines Statorsegments in einer Parallelschaltung betrieben werden und dass weiter die Statorsegmente in einer Parallelschaltung in den Kühlmittelkreislauf eingebunden sind.

Es kann aber auch vorgesehen sein, dass die Kühleinrichtungen eines Statorsegments in einer Serienschaltung betrieben werden und die Statorsegmente in einer Parallelschaltung in den Kühlmittelkreis eingebunden sind oder umgekehrt.

Die Kühleinrichtungen können vorzugsweise aus Kupfer, Aluminium oder Stahl ausgebildet sein. Bei Stahl kann Edelstahl bevorzugt sein. Weiter können die Kühleinrichtungen aus einer Legierung gebildet sein, die eine dem Einsatzzweck entsprechende gute Wärmeleitfähigkeit aufweist.

Es kann weiter vorgesehen sein, dass das Statorsegment einen Temperatursensor aufweist. Der Temperatursensor kann vorgesehen sein, um die Betriebstemperatur des Statorsegments ständig zu überwachen und ein Temperatursignal auszugeben oder um bei Überschreiten einer Solltemperatur ein Signal abzugeben, das beispielsweise eine Notabschaltung der elektrischen Maschine auslöst.

Es kann vorgesehen sein, dass der Kern aus übereinander angeordneten Kernbtättern oder -platten, vorzugsweise Kernblechen ausgebildet ist. Die Kemblätter bzw. -platten können mit einem Thermoklebelack beschichtet sein. Der Thermoklebelack kann aus zwei Komponenten gebildet sein, wobei die Oberseite des Kernblattes bzw. der Kernplatte mit der einen Komponente und die Unterseite des Kernblattes bzw. der Kernplatte mit der anderen Komponente beschichtet sein kann oder umgekehrt.

Einer der Längsabschnitte des Kernblattes bzw, der Kernplatte kann Zähne aufweisen, die kammartig angeordnet sind, wobei die Zähne einen Spulenkernabschnitt bilden oder als Kühlzahn ausgebildet sind.

Weiter kann vorgesehen sein, dass übereinander angeordnete Spulenkernabschnitte einen Spulenkern bilden, der von jeweils einer Spulenwicklung umgriffen ist.

Weiter kann der Kern aus einem Kunststoffmaterial gebildet sein, in das weichmagnetische Partikel eingebettet sind.

Es ist weiter möglich, dass der Kern aus einem weichmagnetischen keramischen Material gebildet ist.

Die Stirnabschnitte benachbarter Spulenkerne können vorzugsweise eine unterschiedliche magnetische Polarität aufweisen. Die Spulenkerne können also in einer Reihe angeordnete Elektromagnete mit abwechselnder Polarität bilden.

Es kann vorgesehen sein, dass der elektrische Antriebsmotor ein Linearmotor, Bogenmotor oder Rotationsmotor ist. Als Linearmotor wird hier ein elektrischer Motor bezeichnet, dessen Läufer auf einer geradenförmigen Führungsbahn geführt ist. Als Bogenmotor wird hier ein elektrischer Motor bezeichnet, dessen Läufer nicht auf einer geradenförmigen Führungsbahn, sondern auf einer bogenförmigen Führungsbahn geführt ist. Bei der bogenförmigen Führungsbahn kann es sich vorzugsweise um einen Kreisbogen handeln, doch es kann auch jede andere stetige Kurve vorgesehen sein, beispielsweise ein Abschnitt einer Parabel oder einer Ellipse. Für von der Kreisbogenform deutlich abweichende Führungsbahnen können vorzugsweise Statorsegmente vorgesehen sein, deren Kernspulenstirnseiten diesem Kurvenverlauf folgen. Es kann in diesem Falle weiter vorgesehen sein, Statorsegmente mit unterschiedlichem Kurvenverlauf, insbesondere mit unterschiedlicher Krümmung, miteinander zu kombinieren, um über die gesamte Führungsbahnlänge einen nahezu konstanten Luftspalt zwischen Läufer und Stator auszubilden.

Die Erfindung wird nun anhand von Ausführungsbeispielen näher erläutert. Es zeigen

Fig. 1 a bis 1 c     unterschiedliche Fertigungsstufen eines ersten Ausführungsbeispiels eines erfindungsgemäßen Statorsegments in perspektivischer Darstellung;

Fig. 2     ein zweites Ausführungsbeispiel eines erfindungsgemäßen Statorsegments in perspektivischer Darstellung;

Fig. 3a     einen Querschnitt des erfindungsgemäßen Statorsegments in Fig. 1;

Fig. 3b     einen Querschnitt eines dritten Ausführungsbeispiels eines erfindungsgemäßen Statorsegments für einen Linearmotor;

Fig. 4a bis 4c     Ausführungsbeispiele zur maßlichen Anordnung der Kühlkörper im Kern;

Fig. 5     ein viertes Ausführungsbeispiel eines erfindungsgemäßen Statorsegments in perspektivischer Darstellung;

Fig. 6a und 6b     ein erstes Anordnungsbeispiel des Statorsegments in Fig. 5;

Fig. 7a und 7b     ein zweites Anordnungsbeispiel des Statorsegments in Fig. 5;

Fig. 8     Ausführungsbeispiele für Kühlkörperquerschnitte von Kühlkörpern;

Fig. 9     einen Bogenmotor mit dem Statorsegment in Fig. 3a in schematischer Darstellung;

Fig. 10     einen Linearmotor mit dem Statorsegment in Fig. 3b in schematischer Darstellung;

Fig. 11     einen Glas-Feeder mit dem Linearmotor in Fig. 10 in schematischer Darstellung;

Fig. 12     ein erstes Ausführungsbeispiel zur Einbindung der Kühlkörper in einen Kühlmittelkreislauf;

Fig. 13     ein zweites Ausführungsbeispiel zur Einbindung der Kühlkörper in den Kühlmittelkreislauf;

Fig. 14     einen Drehtisch mit einem Scheibenläufermotor und Statorsegmenten in Fig. 5;

Fig. 15     eine Glasmaschine mit Glas-Feeder und Drehtisch.

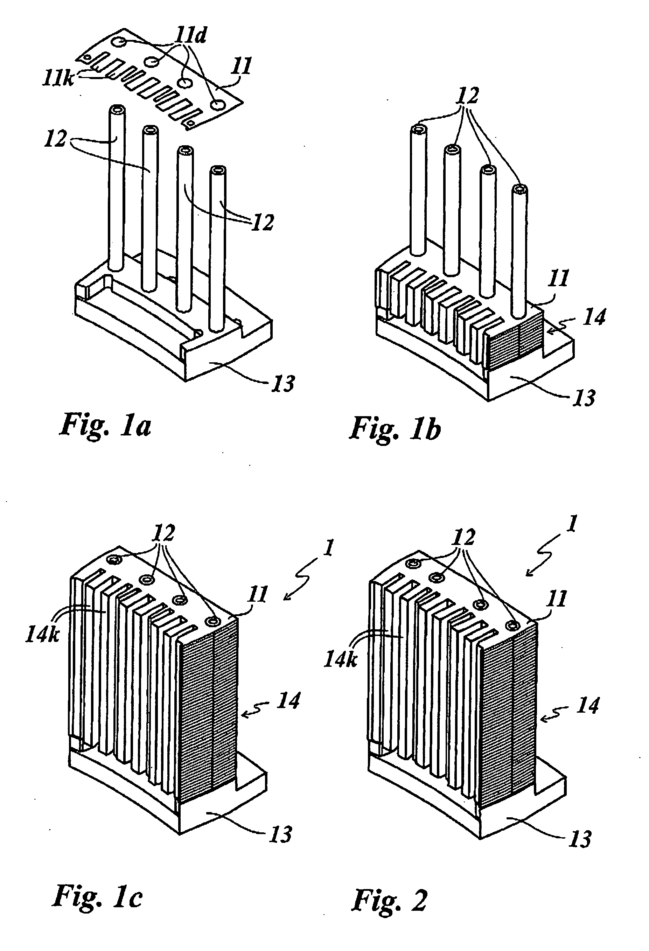

Die Fig. 1a bis 1c zeigen unterschiedliche Fertigungsstufen eines erfindungsgemäßen Statorsegments 1 eines Direktantriebs für eine Glasmaschine. Der Direktantrieb besteht aus einem elektrischen Antriebsmotor, der ohne Zwischenschaltung eines Getriebes mit dem angetriebenen Maschinenelement verbunden ist. Der elektrische Antriebsmotor kann als Linearmotor, als Bogenmotor oder als Rotationsmotor ausgebildet sein. Das Statorsegment 1 bildet einen Statorabschnitt oder den Stator des elektrischen Antriebsmotors, der in elektromagnetischem Kontakt zu einem aus Permanentmagneten gebildeten Läufer steht.

Das Statorsegment 1 weist einen Kern 14 aus übereinander angeordneten Kernblechen 11, Kühleinrichtungen, die als rohrförmige Kühlkörper 12 ausgebildet sind, und eine Grundplatte 13 auf. In dem in Fig. 1a bis 1c dargestellten Ausführungsbeispiel ist der Kern 14 aus etwa 400 Kernblechen 11 gebildet. Die Kernbleche 11 bestehen aus weichmagnetischem Material, beispielsweise aus Dynamoblech. Es kann aber auch vorgesehen sein, dass der Kern 14 nicht aus Kernblechen aufgebaut ist, sondern als kompakter Körper, der beispielsweise aus einem Kunststoffmaterial mit eingelagerten weichmagnetischen Partikeln oder aus einem weichmagnetischen keramischen Material besteht.

Die Kernbleche 11 weisen Durchgangslöcher 11 d auf, die von den Kohlkörpern 12 durchgriffen sind. Die Kühlkörper 12 sind in der Grundplatte 13 befestigt. Die Kühlkörper 12 können beispielsweise in Durchgangslöcher in der Grundplatte 13 eingeklebt sein. In dem in Fig. 1a bis 1c dargestellten Ausführungsbeispiel sind vier hohlzylinderförmige Kühlkörper 12 vorgesehen und dementsprechend vier kreisförmige Durchgangslöcher 11d. Die Kühlkörper 12 sind vorteilhafterweise aus einem Material mit hoher Wärmeleitfähigkeit ausgebildet, zum Beispiel aus Kupfer, Aluminium oder Stahl oder aus einer Legierung. Im industrieeinsatz hat sich wegen seiner Korrosionsfestigkeit besonders Edelstahl bewährt.

Die Einbindung der Kühlkörper 12 in einen Kühlmiftelkreislauf ist weiter unten beschrieben.

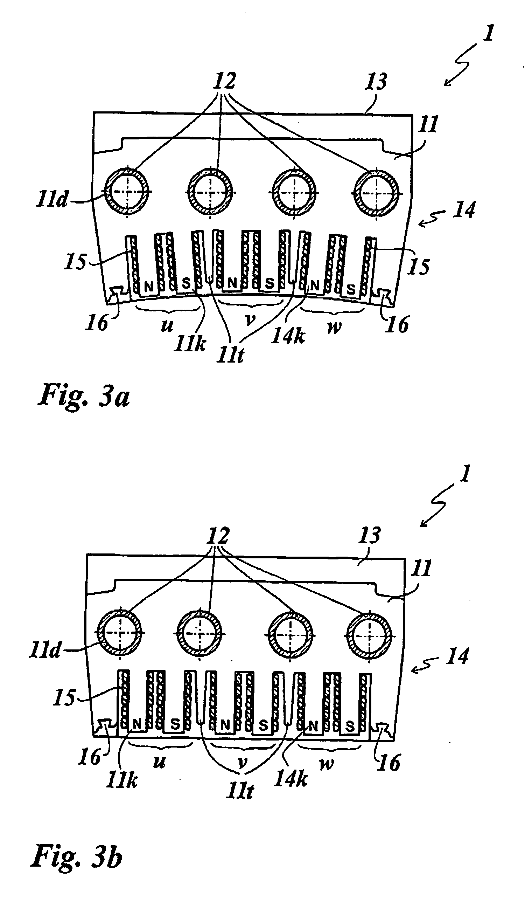

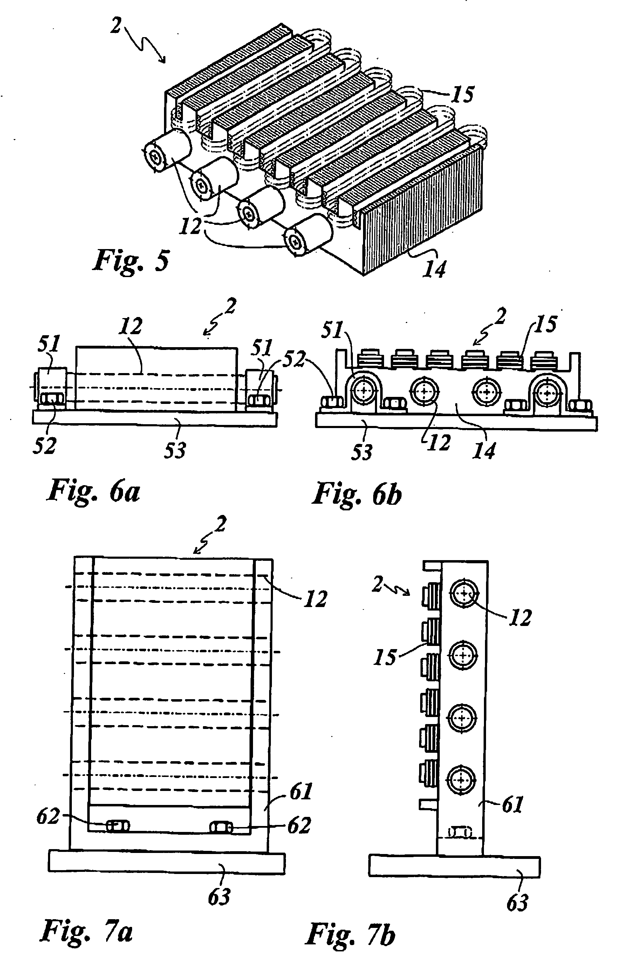

Die Kernbleche 11 sind in einem dem Läufer (in Fig. 1a bis 1c nicht dargestellt) zugewandten Längsabschnitt kammförmig ausgebildet, wobei in dem dargestellten Fall sechs rechteckförmig ausgebildete Zähne Kernabschnitte 11 k von Spulenkernen 14k bilden. Die Spulenkerne 14k sind durch Nuten voneinander getrennt, die für die Aufnahme von Spulenwicklungen 15 vorgesehen sind (siehe Fig. 3 und 5). Die Nuten verlaufen im Kern 14 senkrecht zu den Stirnflächen des Kerns und parallel zu den Längsachsen der Kühlkörper 12.

Zur Montage des Statorsegments 1 wird jeweils ein Teilstapel aus etwa 10 bis 20 übereinander gestapelten Kernblechen 11 gebildet, und die Kühlkörper 12 werden in die Durchgangslöcher 11 d eingeführt. Der Teilstapel wird sodann unter Druckeinwirkung auf die Grundplatte 13 bzw. auf bereits auf die Grundplatte 13 gestapelte Kernbleche 11 gepresst. Der Anpressdruck ist erforderlich, um die zwischen der Innenwand der Durchgangslöcher 11d und der Außenwand der Kühlkörper 12 ausgebildeten Reibkräfte zu überwinden. Die Kernbleche 11 sind auf der Ober- und Unterseite mit einem Thermolack beschichtet, der benachbarte Kernbleche 11 unter Druck- und Temperatureinwirkung miteinander verklebt. Vorteilhafterweise handelt es sich um eine Zweikomponenten-Lackbeschichtung, wobei die Vorder- und die Rückseite des Kernblechs 11 mit unterschiedlichen Komponenten beschichtet sind, die bei Temperatureinwirkung miteinander reagieren und eine dauerhafte Verbindung eingehen. Derartige Lacke sind aus der Motorenfertigung bekannt. Die Kernbleche 11 des vollständig aufgebauten Kerns 14 werden unter Druck- und Temperatureinwirkung wie vorstehend beschrieben miteinander verklebt.

Zur Ausbildung einer kraftschlüssigen Verbindung zwischen dem Kern 14 und der Kühlkörper 12 können vorzugsweise zwei Maßnahmen vorgesehen sein:

a) Der Außendurchmesser der Kühlkörper 12 ist mit Übermaß zu dem Innendurchmesser des Durchgangslochs 11d ausgebildet.
b) Der Teilungsabstand der Kühlkörper 12 ist größer oder kleiner als der Teilungsabstand der Durchgangslöcher 11d.
Der Begriff "Teilungsabstand" ist hier nicht an einen konstanten Teilungsabstand gebunden, wenngleich der konstante Teilungsabstand bevorzugt sein kann.

Mit der Maßnahme a) ist es möglich, bereits mit einem Kühlkörper 12 den Kern 14 zu klemmen, doch sind zwei und mehr Kühlkörper 12 bevorzugt, um eine effektive Wärmeableitung aus dem Kern 14 zu ermöglichen. Wenn zwei Kühlkörper 12 vorgesehen sind, ist der Kern 14 zudem gegen Verdrehen gesichert,

In Fig, 2 ist unter Umsetzung der Maßnahme b) ein Statorsegment 1 mit einem Kern 14 dargestellt, bei dem die in den Kernblechen 11 angeordneten Durchgangslöcher 11d einen variablen Teilungsabstand aufweisen. Folglich sind die Kernbleche 11 nur in einer bevorzugten Lage montierbar, so dass eine Fehlmontage ausgeschlossen ist. Eine sichere kraftschlüssige Verbindung zwischen den Kühlkörpern 12 und dem Kern 14 liegt im Allgemeinen bereits vor, wenn die Übermaße bzw. Toleranzen der Teilungsabstände im Bereich von hundertstel Millimetern liegen.

Die Fig. 3a und 3b zeigen nun Schnittansichten des Statorsegments 1, die den Aufbau des Statorsegments 1 weiter verdeutlichen.

Fig. 3a zeigt das durch die Spulenwicklungen 15 vervollständigte Statorsegment 1 in Fig. 1c in einer Schnittdarstellung. Das Statorsegment 1 kann für den Betrieb mit Dreiphasen-Wechselstrom vorgesehen sein. Die Spulenwicklungen 15 sind in die Nuten zwischen den Kernabschnitten 11k eingebracht, die im Kern 14 Spulenkerne 14k bilden. Spulenwicklungen 15 und Spulenkerne 14k bilden Kernspulen, wobei jeweils zwei benachbarte Kernspulen 17 eine Kernspulengruppe u, v, w bilden. Die Spulenwicklungen 15 der Kernspulengruppe sind so ausgebildet, dass die dem Läufer zugewandten Endabschnitte beider Spulenkerne 14k der Kernspulengruppe u, v, w magnetische Gegenpole bilden. Zwischen benachbarten Spulengruppen ist ein Zahn des Kernblechs angeordnet, der als Kühlzahn ausgebildet ist. Die Kernspulen sind mit einer isolierenden Vergussmasse vergossen, die die Spulenwicklungen 15 umgibt und die Nuten im Kern 14 vollständig ausfüllt. Die in Fig. 3 nicht dargestellte Vergussmasse fixiert die Spulenwicklungen 15 und schützt sie vor Umwelteinflüssen, wie Feuchtigkeit und Verschmutzung.

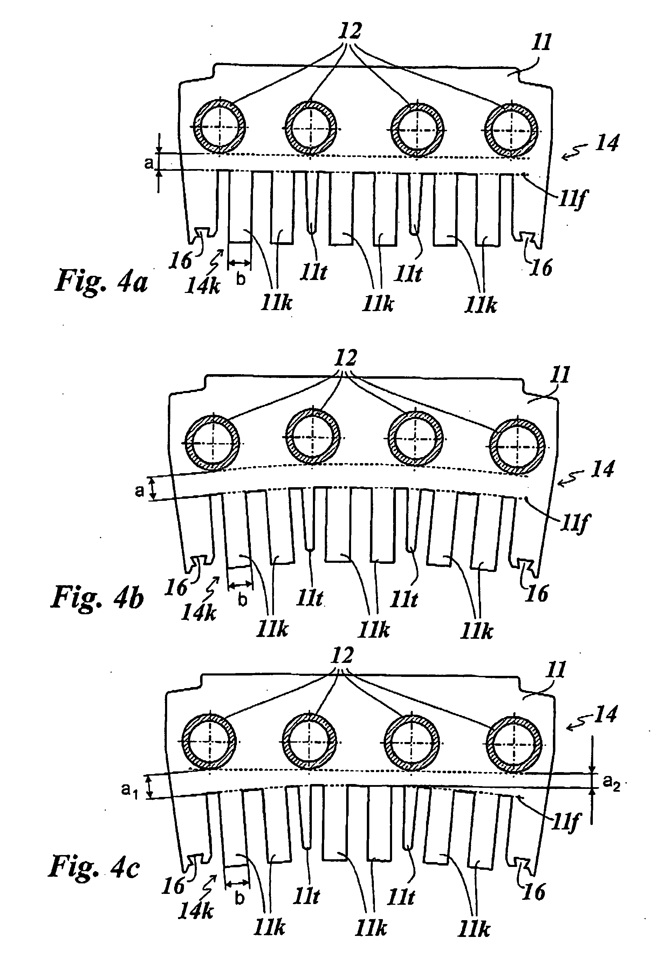

Weiter weist das Kernblech 11 bzw. der Kern 14 schwalbenschwanzförmige Hinterschneidungen 16 auf, die Befestigungselemente aufnehmen können und/oder mit einer Vergussmasse ausgefüllt sein können. Die Lage und Geometrie der Hinterschneidungen 16 ist in Fig. 3a beispielhaft dargestellt. Hinterschneidungen 16 können auch in anderen Randbereichen des Kernblechs 11 bzw. des Kerns 14 vorgesehen sein, beispielsweise zur Aufnahme von Befestigungselementen, wobei u. U. auch die Grundplatte 13 entbehrlich sein kann. Weitere Ausführungen ohne Grundplatte sind weiter unten in den Fig. 4 bis 6 dargestellt.

Die Stirnseiten der Spulenkernabschnitte 11k bzw. der Spulenkerne 14 bilden Abschnitte oder Tangenten eines Kreisbogens und stehen auf den Längsachsen der Spulenkernabschnitte 11 k senkrecht.

Die weiter oben beschriebenen Durchgangslöcher 11d sind im hinteren Längsabschnitt des Kernblechs 11 mit einem konstanten Teilungsabstand angeordnet. Die Mittelpunkte der Durchgangslöcher 11d liegen in dem in Fig. 3a dargestellten Ausführungsbeispiel auf einer Geraden.

Fig. 3b zeigt nun ein Statorsegment 1, das sich von dem in Fig. 3a dargestellten Statorsegment dadurch unterscheidet, dass die Stirnseiten der Spulenkernabschnitte 11k fluchten und auf den Längsachsen der Spulenkernabschnitte 11k senkrecht stehen. Das Statorsegment 1 ist vorzugsweise zum Aufbau eines Linearantriebs vorgesehen, bei dem der Läufer auf einer zu den Stirnseiten der Spulenkernabschnitte 11k bzw. der Spulenkerne 14k parallelen geradlinigen Führungsbahn geführt ist.

Die Fig. 4a bis 4c zeigen jeweils einen aus übereinander gestapelten Kernblechen 11 gebildeten Kern 14, wie in Fig. 3a und 3b dargestellt, der von rohrförmigen Kühlkörpern 12 durchgriffen ist.

Bei der praktischen Realisierung der erfindungsgemäßen Glasmaschinen, deren Antriebsmotoren sich durch einen besonders einfachen Aufbau und durch eine zuverlässige und effiziente Kühlung auszeichnen, hat sich bewährt, wenn der Abstand a der Kühlkörper 12 bzw, des Durchgangsloches 11d von einer Fußpunktlinie 11f der Nuten im Bereich der 0,5-fachen bis 10-fachen Breite b der Spulenkerne 14k liegt:

$$0,5\,b \leq a \leq 10\,b$$

Die Breite des Spulenkerns 14k ist gleich der Breite der Spulenkernabschnitte 11 k, die im Kernblechstapel den Spulenkern 14k bilden.

Fig. 4a zeigt ein erstes Ausführungsbeispiel, bei dem die Fußpunktlinie 11f eine Gerade bildet, die zugleich eine Tangente an die mit kreisringförmigem Querschnitt ausgebildeten Kühlkörper 12 bildet. Die Kühlkörper 12 fluchten, d. h. die Mittelpunkte der Kühlkörper 12 liegen auf einer Geraden. Folglich ist der Abstand a für jeden Kühlkörper 12 konstant. In dem in Fig. 4a dargestellten Ausführungsbeispiel sind vier Kühlkörper 12 vorgesehen.

Der in Fig. 4a dargestellte Kern 14 kann vorzugsweise zum Aufbau von Linearmotoren vorgesehen sein, wie weiter oben in Fig. 3b beschrieben.

Fig. 4b zeigt ein zweites Ausführungsbeispiel, bei dem die Fußpunktlinie 11f eine Kurve ist, hier ein Kreisbogenabschnitt. Die Kühlkörper 12 sind auch auf einem Kreisbogenabschnitt angeordnet, so dass der Abstand a der Kühlkörper 12 von der Fußpunktlinie 11f konstant ist.

Fig. 4c zeigt ein drittes Ausführungsbeispiel, das dem in Fig. 4b dargestellten Ausführungsbeispiel entspricht, mit dem Unterschied, dass die Kühlkörper 12 auf einer Geraden angeordnet sind. Folglich ist der Abstand a der Kühlkörper 12 von der Fußpunktlinie 11f der Nuten nicht konstant, sondern nimmt die Werte $a_1$ und $a_2$ an, wobei $a_1 > a_2$. Sowohl $a_1$ als auch $a_2$ liegen im Bereich 0,5 b bis 10 b.

Fig. 5 zeigt ein viertes Ausführungsbeispiel eines erfindungsgemäßen Statorsegments. Ein Statorsegment 2 ist im Wesentlichen wie das in Fig. 3b beschriebene Statorsegment 1 aufgebaut, jedoch mit dem Unterschied, dass die Kühlkörper 12 zu beiden Seiten des Kerns 14 hervorragen und dass keine Grundplatte 13 vorgesehen ist. Die an den beiden langen Schmalseiten des Kerns 14 hervorragenden Endabschnitte der Kühlkörper 12 sind als Befestigungsabschnitte vorgesehen, um das Statorsegment 2 auf einem Maschinengestell oder dergleichen zu befestigen. Die Kühlkörper 12 sind jeweils in den von ihnen durchgriffenen Durchgangslöchern des Kerns 14 kraftschlüssig fixiert, weil der Außendurchmesser der Kühlkörper 12 mit Übermaß zu dem Innendurchmesser des Durchgangslochs ausgebildet ist.

Die Fig. 6a und 6b zeigen nun eine erste Befestigungsvariante des in Fig. 5 beschriebenen Statorsegments 2. Die Endabschnitte der beiden endständigen Kühlkörper 12 sind von Spannelementen 51 übergriffen, die mit Befestigungselementen auf einem plattenförmigen Gestell 53 befestigt sind. Die Spannelemente sind als U-förmige Bügel mit nach außen um 90° abgewinkelten Endabschnitten ausgebildet, wobei der Nenn-Innenabstand der beiden U-Schenkel dem Nenn-Durchmesser der Kühlkörper 12 entspricht. Die Befestigungselemente 52 sind in dem in den Fig. 5a und 5b dargestellten Ausführungsbeispiel als Schrauben ausgebildet, welche die abgewinkelten Endabschnitte des Spannelements 51 durchgreifen und beispielsweise mit Gewindelöchern im Gestell 53 zusammenwirken. Das Spannelement 51 ist maßlich so dimensioniert, dass im ungespannten Zustand ein Spalt zwischen dem Gestell 53 und der dem Gestell 53 zugewandten Fläche des abgewinkelten Endabschnitts des Spannelements 51 ausgebildet ist. Beim Anziehen der Befestigungselemente 52 wird der Spalt verringert oder beseitigt und damit die eine ebene Fläche bildende Unterseite des Kerns 14 auf die Oberseite des Gestells 53 gepresst.

Die Fig. 7a und 7b zeigen nun eine zweite Befestigungsvariante des in Fig. 5 beschriebenen Statorsegments 2. Das Statorsegment 2 ist in einem bügelförmigen Spannelement 61 befestigt. Das Spannelement 61 ist U-förmig ausgebildet, Die beiden U-Schenkel weisen Durchgangslöcher auf, die von den Endabschnitten der Kühlkörper 12 durchgriffen sind. Zur Erleichterung der Montage kann vorgesehen sein, dass der die beiden U-Schenkel verbindende Querschenkel des Spannelements 61 aufgetrennt ist, so dass das Spannelement 61 aus zwei L-förmigen Elementen gebildet ist, die von beiden Seiten auf die Kühlkörper 12 des Kerns 14 geschoben werden. Es kann eine kraftschlüssige Verbindung vorgesehen sein, d. h. die beiden Elemente des Spannelements 61 können auf die Endabschnitte der Kühlkörper 12 aufgepresst werden. Es kann aber auch vorgesehen sein, Spannelement 61 und Kühlkörper 12 miteinander zu verkleben oder eine lösbare Verbindung zu wählen, beispielsweise eine Schraubverbindung. Der die beiden U-Schenkel verbindende Querschenkel des Spannelements 61 ist von Befestigungsmitteln 62 durchgriffen, die ihn auf einem Gestell 63 fixieren. Die Befestigungselemente 62 sind in dem in den Fig. 6a und 6b dargestellten Ausführungsbeispiel als Schrauben ausgebildet, die das Spannelement 61 durchgreifen und beispielsweise mit Gewindelöchern im Gestell 53 zusammenwirken.

Zur Befestigung der Statorsegmente 1 können auch Ankerelemente, wie T-Anker vorgesehen sein, die in Ausnehmungen oder Nuten des Kerns 14 eingreifen und die beispielsweise durch Schraubverbindungen auf dem Gestell befestigt sind. Es kann auch vorgesehen sein, dass in dem Kern 14 Gewindelöcher ausgebildet sind zur Aufnahme von Befestigungsschrauben.

In den Fig. 1c und 2 bis 7b ist gezeigt, dass das Statorsegment 1, 2 eine Baugruppe bildet, die in den drei Raumachsen aufspannbar ist, so dass sehr unterschiedliche elektrische Motoren aufbaubar sind. So kann zum Beispiel mit der weiter oben in Fig. 6a und 6b dargestellten Aufspannung ein Scheibenläufermotor aufgebaut werden, indem mehrere der Statorsegmente 2 in Fig. 5 in einem Kreis auf einer Scheibe angeordnet werden, wobei die Stirnseiten der Spulenkerne der Scheibe abgewandt sind. Die auf diese Weise angeordneten Statorsegmente 2 bilden zwar ein Polygon, doch ist bei entsprechender Ausführung eine für die praktischen Belange ausreichende Annäherung an die Kreisform möglich, beispielsweise bei Verwendung von 12 oder mehr Statorsegmenten 2. Es sind allerdings auch Ausführungsbeispiele möglich, bei denen nur ein Statorsegment 2 vorgesehen ist. Eine besonders flexibel einsetzbares Statorsegment kann nur zwei Spulenkerne aufweisen, wobei die Stirnflächen der beiden Spulenkerne fluchten. Mit nur zwei Spulenkernen ausgebildete Statorsegmente können sowohl in linearer Anordnung als auch ohne Einschränkungen bezüglich der Mindestanzahl der Statorsegmente in bogenförmiger Anordnung eingesetzt werden.

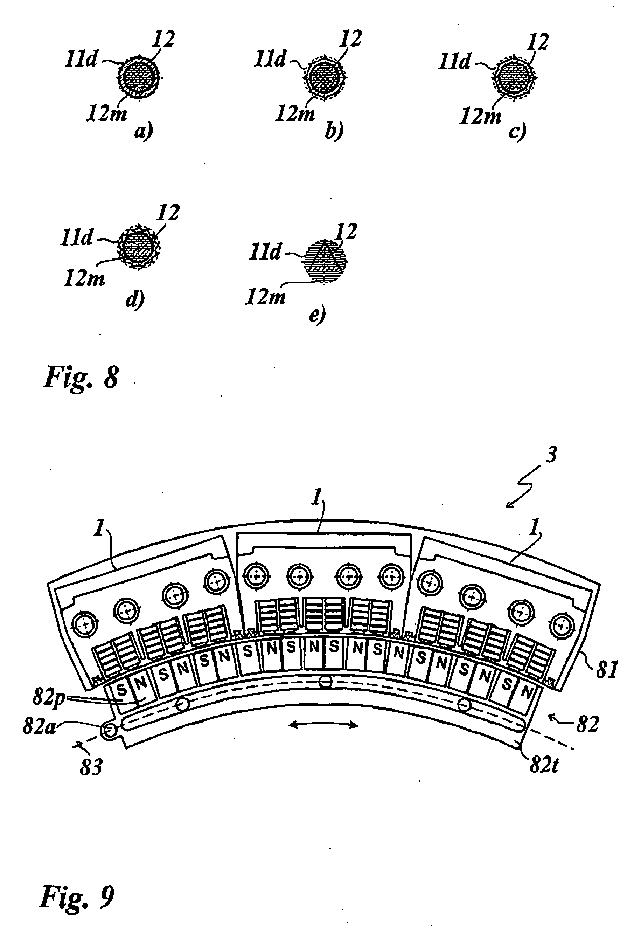

Fig. 8 zeigt Ausführungsbeispiele der Kühlkörper 12, die sich hinsichtlich ihrer Querschnittsgeometrie unterscheiden. Mit Pos. 12m ist ein Kühlmittel bezeichnet, das durch die Kühlkörper 12 oder entlang der Kühlkörper 12 fließt. Sämtliche Kühlkörperquerschnitte a) bis e) sind mit kreisförmigen Durchgangslöchern 11d in dem Kern gepaart. Folglich stimmt nur für den kreisringförmigen Kühlkörperquerschnitt a) die Geometrie des Durchgangslochs mit der Geometrie des Kühlkörperquerschnitts überein. Es kann jedoch auch für die Kühlkörperquerschnitte b) bis d) die Geometrie des Durchgangslochs so gewählt sein, dass sie mit der Geometrie des Kühlkörperquerschnitts übereinstimmt. Es könne also Durchgangslöcher mit polygonförmigem bzw. sternförmigem Querschnitt vorgesehen sein.

Die Ausführungsform a) kann bevorzugt sein, weil sie besonders einfach herstellbar ist. Die Ausführungsformen b) und d) zeichnen sich dadurch aus, dass zwischen der Innenwand des Durchgangslochs 11d und der Außenwand des Kühlkörpers 12 Spalte ausgebildet sind, die mit einem geeigneten, vorzugsweise hoch wärmeleitfähigem Kleber ausgefüllt, die Haftung zwischen dem Kern 14 und den Kühlkörper 12 verbessern können. Es ist prinzipiell möglich, einen beliebigen Kühlkörperquerschnitt zu wählen.

Bei der Ausführungsform e) ist vorgesehen, dass das Kühlmittel 12m in einem Spaltraum fließt, der zwischen der Außenwand der Kühlkörper 12 und der Innenwand des Durchgangslochs 11d fließt. Der Kühlkörper 12 ist als ein Kühlkörper mit dreieckigem Querschnitt ausgebildet, so dass drei Spalträume ausgebildet sind. Es kann auch vorgesehen sein, dass der Kühlkörper ein axiales Durchgangsloch aufweist, wenngleich für Ausführungsform e) ein Kühlkörper ohne Durchgangsloch bevorzugt sein kann.

Die Fig. 9 zeigt nun in schematischer, unmaßstäblicher Darstellung die Verwendung des weiter oben in Fig. 3a dargestellten Statorsegments 1 in einem Bogenmotor 3 mit einem Stator 81 und einem Läufer 82, der auf einer Führungsbahn 83 geführt ist.

Als Bogenmotor wird hier eine elektrischer Motor bezeichnet, dessen Läufer auf einer bogenförmigen Führungsbahn geführt ist. Dabei kann der Läufer vorzugsweise drehstarr auf einem Führungselement angeordnet sein, das vorzugsweise spielfrei in der Führungsbahn geführt ist. Bei der bogenförmigen Führungsbahn kann es sich vorzugsweise um einen Kreisbogen handeln, doch es kann auch jede andere stetige Kurve vorgesehen sein, beispielsweise ein Abschnitt einer Parabel oder einer Ellipse. Wenn eine von der Kreisbogenform nur gering abweichende Führungsbahn vorgesehen ist, ist das in Fig. 3a beschriebene Statorsegment ohne Einschränkungen verwendbar. Für von der Kreisbogenform deutlich abweichende Führungsbahnen können vorzugsweise Statorsegmente vorgesehen sein, deren Kernspulenstimseiten diesem Kurvenverlauf folgen. Es kann in diesem Falle weiter vorgesehen sein, Statorsegmente mit unterschiedlichem Kurvenverlauf, insbesondere mit unterschiedlicher Krümmung, miteinander zu kombinieren.

Der Stator 81 des Bogenmotors 3 weist drei nebeneinander angeordnete Statorsegmente 1 auf. Die Stirnflächen der Spulenkerne bilden Tangentenflächen an eine Kreisbogenfläche, deren Mittelpunkt mit dem Mittelpunkt der kreisbogenförmigen Führungsbahn 83 zusammenfällt. Der Läufer 82 des Bogenmotors 3 weist Permanentmagnete 82p auf, die mit abwechselnder Polarität nebeneinander angeordnet sind und deren Stirnflächen unter Ausbildung eines Luftspaltes den Stirnflächen der Spulenkerne zugewandt auf einer Trägerplatte 82t angeordnet sind.

Der Bogenmotor 3 weist einen Abtrieb 82a auf, der in dem in Fig. 9 dargestellten Ausführungsbeispiel als Lagerbohrung in einem Endabschnitt der Trägerplatte 82t ausgebildet ist. Der Mittelpunkt der Lagerbohrung liegt auf der Führungsbahn 83.

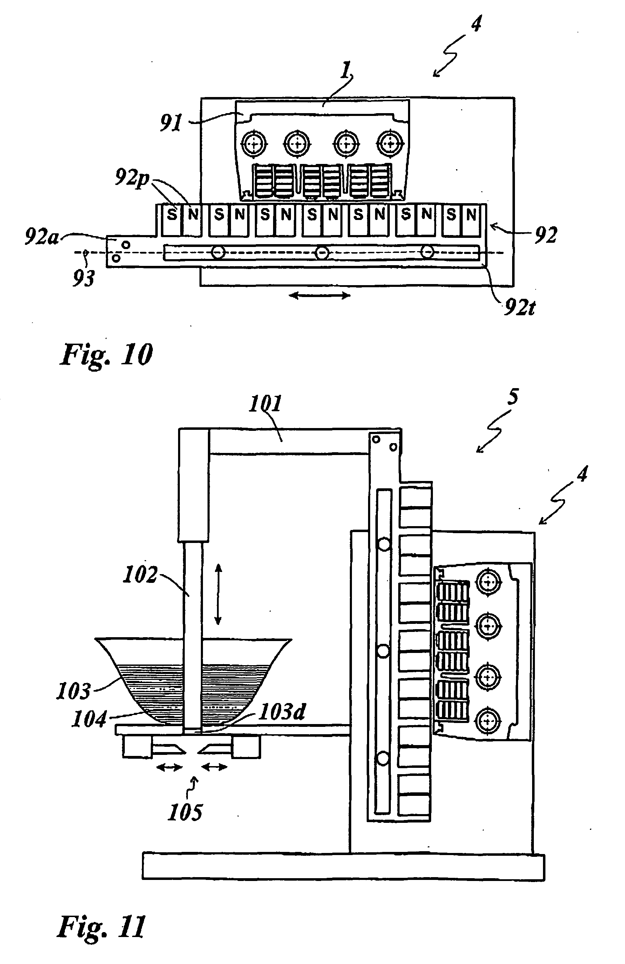

Die Fig. 10 zeigt nun in schematischer, unmaßstäblicher Darstellung die Verwendung des weiter oben in Fig. 3b dargestellten Statorsegments 1 in einem Linearmotor 4 mit einem Stator 91 und einem Läufer 92, der auf einer Führungsbahn 93 geführt ist.

Als Linearmotor wird hier ein elektrischer Motor bezeichnet, dessen Läufer auf einer geradenförmigen Führungsbahn geführt ist.

Der Stator 91 des Linearmotors 4 ist aus einem Statorsegment 1 gebildet. Es können aber auch je nach Leistungsbedarf und Verfahrweg des Läufers 92 zwei und mehr Statorsegmente 1 hintereinander angeordnet werden. Die Stirnflächen der Spulenkerne der Statorsegmente 1 fluchten miteinander längs einer Geraden, die parallel zu der geradenförmigen Führungsbahn 93 angeordnet ist. Der Läufer 92 des Linearmotors 4 weist Permanentmagnete 92p auf, die mit abwechselnder Polarität nebeneinander angeordnet sind und deren Stirnflächen unter Ausbildung eines Luftspaltes den Stirnflächen der Spulenkerne zugewandt auf einer Trägerplatte 92t angeordnet sind.

Der Linearmotor 4 weist einen Abtrieb 92a auf, der in einem Endabschnitt der Trägerplatte 92t angeordnet ist. Der Abtrieb 92a ist in dem in Fig. 10 dargestellten Ausführungsbeispiel durch zwei Befestigungslöcher gebildet, die zur Aufnahme eines Befestigungselements bestimmt sind, beispielsweise einer Schraube oder eines Niets.

Fig. 11 zeigt nun beispielhaft die Verwendung des vorstehend in Fig. 10 beschriebenen Linearmotors 4 in einem Glas-Feeder 5. Bei dem Glas-Feeder 10 handelt es sich um eine direkt angetriebene Maschine, die Glastropfen für eine Glasformmaschine bereitstellt. Über einem Glasschmelzebehälter 103 mit einer Glasschmelze 104 ist ein senkrecht verfahrbarer Plunger 102 angeordnet, der in seiner unteren Stellung eine im Boden des Glasschmelzebehälters 103 als Durchgangsloch eingebrachte Ausgangsöffnung 103d verschließt und in seiner oberen Stellung die Ausgangsöffnung 103d freigibt. Durch die Ausgangsöffnung 103d tritt im geöffneten Zustand Glasschmelze 104 aus, die einen Tropfen bildet, der von einer Tropfen-Schere 105 abgetrennt wird.

Der Plunger 102 ist mit einem waagerecht angeordneten Verbindungsbalken 101 verbunden, der drehstarr mit dem Abtrieb des senkrecht angeordneten Linearmotors 4 verbunden ist. Die Führungsbahn des Läufers des Linearmotors 4 verläuft parallel zur Bewegungsbahn des Plungers 102.

Weitere Elemente bzw. Baugruppen, wie eine Motorsteuerung, Mittel zum Gewichtsausgleich und dergleichen, sind in Fig. 11 nicht dargestellt. Wesentlich für die in Fig. 11 dargestellte Glasmaschine ist der Direktantrieb des Plungers 102 durch den Linearmotor 4.

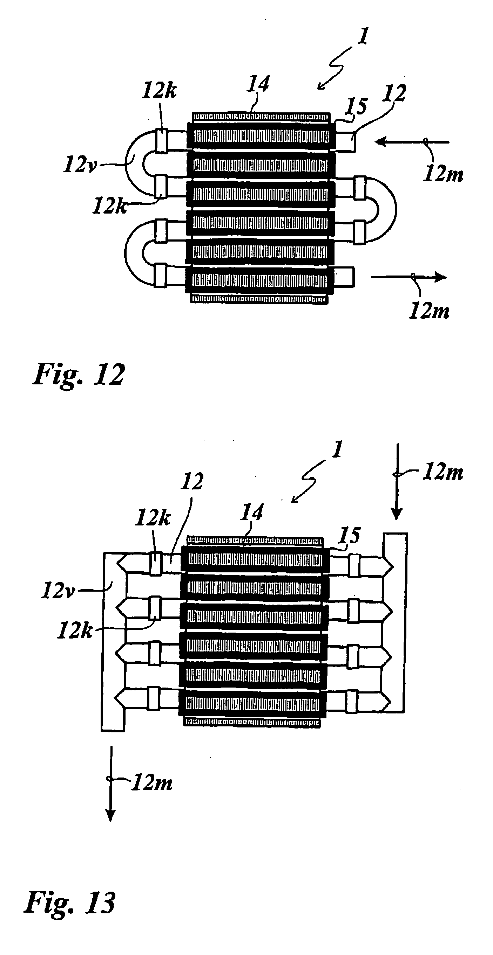

Die Fig. 12 und 13 zeigen nun beispielhaft die Einbindung der Kühlkörper 12 in einen Kühlmittelkreislauf. Es handelt sich um einen Kühlmittelkreislauf, wie er zur Kühlung von elektrischen Motoren üblich ist. In dem in Fig. 12 und 13 nicht dargestellten Kühlmittelkreislauf zirkuliert das Kühlmittel 12m.

Die den Kern 14 des Statorsegments 1 durchgreifenden rohrförmigen Kühlkörper 12 sind durch Kupplungen 12k mit dem Kühlmittelkreislauf bzw. mit Verbindungsleitungen 12v verbunden. Bei den Kupplungen 12k kann es sich beispielsweise um Rohrverschraubungen handeln. Es können aber auch Lötverbindungen oder Klebverbindungen vorgesehen sein. Auch Schnellspannverbindungen können vorgesehen sein, um Montage und/oder Service besonders zu erleichtern.

In dem in Fig. 12 dargestellten Ausführungsbeispiel durchgreifen vier in Reihe geschaltete Kühlkörper 12 den Kern 14 des Statorsegments 1. Es sind insgesamt drei bogenförmige Verbindungsleitungen 12v vorgesehen, die über Kupplungen 12k mit den Endabschnitten der Kühlkörper 12 verbunden sind. Jeweils zwei benachbarte Kühlkörper 12 sind durch eine der Verbindungsleitungen 12v miteinander verbunden. Wie Versuche gezeigt haben, weist das Kühlmittel 12m am Austritt aus dem Statorsegment 1 eine um etwa 2 Kelvin höhere Temperatur auf als am Eintritt in das Statorsegment 1. Es ist folglich möglich, mehrere Statorsegmente 1 im Kohlmittelkreislauf hintereinander zu schalten, beispielsweise fünf Statorsegmente 1, wobei eine Temperaturerhöhung um etwa 10 K eintritt.

Fig. 13 zeigt nun ein weiteres Ausführungsbeispiel, bei dem der Kern 14 des Statorsegments 1 ebenfalls von vier Kühlkörpern 12 durchgriffen ist. Die Kühlkörper 12 sind parallel geschaltet. Die Verbindungsleitungen 12v verbinden nun jeweils die auf einer Seite des Statorsegments angeordneten Endabschnitte der Kühlkörper 12m miteinander. Der Kühlmittelkreislauf muss im Vergleich zu dem in Fig. 12 dargestellten Ausführungsbeispiel bei gleichem Durchfluss der Kühlkörper für den vierfachen Durchfluss ausgelegt sein.

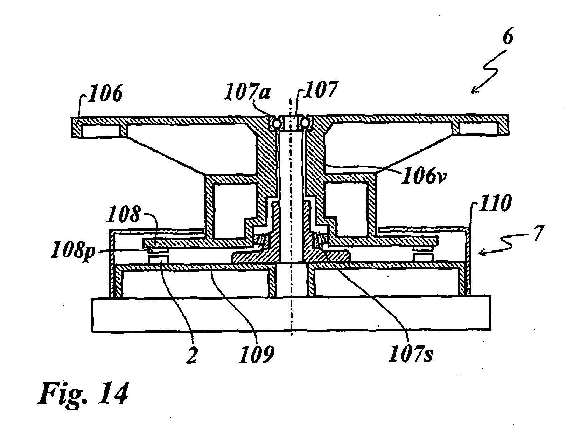

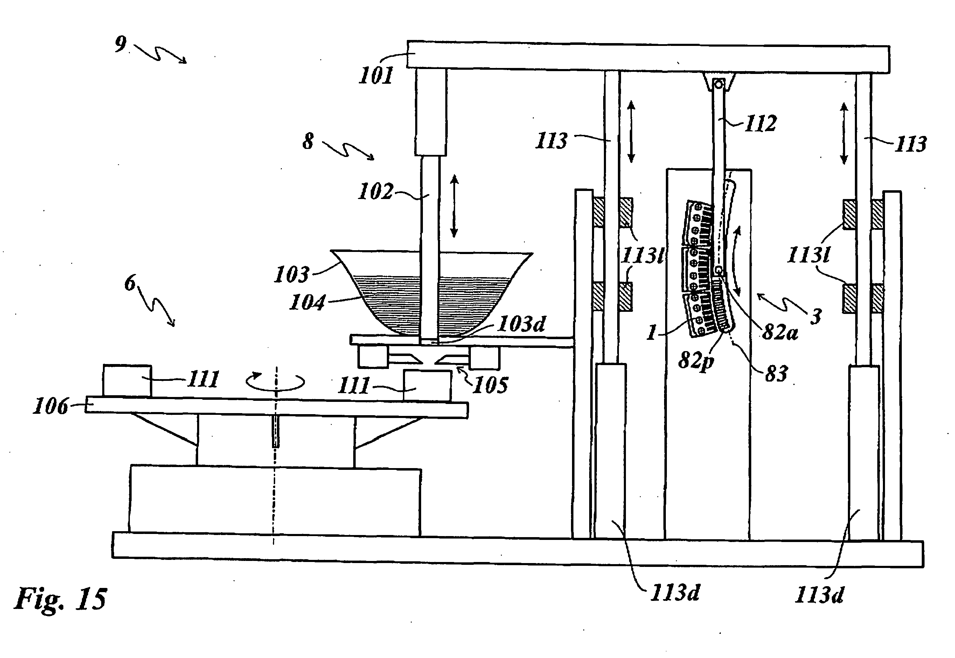

Fig. 14 zeigt nun einen Drehtisch 6 mit einer von einem Scheibenläufermotor 7 direkt angetriebenen drehbaren Drehtischplatte 106. Der Drehtisch 6 ist beispielsweise zur Aufnahme von Glasformen bestimmt, wie weiter untern in Fig. 15 dargestellt,.

Der Drehtisch 6 weist einen senkrecht angeordneten zentralen Aufnahmeschaft 107 auf, der eine Grundplatte des Drehtischs 6 senkrecht durchgreift. Bei dem Aufnahmeschaft 107 handelt es sich um einen zweifach abgesetzten zylindrischen Schaft.

Die Drehtischplatte 106 geht in ihrem unteren Endabschnitt in einen mehrfach abgestuften Verbindungsabschnitt 106v über. Der Verbindungsabschnitt 106v ist an seinem unteren Endabschnitt drehstarr mit einem Rotor 108 des Scheibenläufermotors 7 verbunden. Der Rotor 108 trägt auf seiner Unterseite kreisringförmig und mit abwechselnder Polarität angeordnete Permanentmagnete 108p. Unter dem Rotor 108 ist ein Stator 109 angeordnet, der sich auf der Grundplatte des Drehtisches 106 drehfest abstützt. Auf der Oberseite des Stators 109, die dem Rotor 108 zugewandt ist, sind polygonförmig Statorsegmente 2 (siehe Fig. 4) angeordnet. Dabei sind die Stirnseiten der Spulenkerne unter Ausbildung eines Luftspaltes den Permanentmagneten 108p zugewandt. Bei abgewandelten Ausführungsbeispielen können Permanentmagnete 108p auf der Oberseite des Rotors 108 angeordnet sein, und der Stator 109 kann über dem Rotor 108 angeordnet sein. Die Statorsegmente 2 können beispielsweise mit Dreiphasenstrom erregt sein, wie weiter oben beschrieben.

Auf dem unteren Absatz des Aufnahmeschafts 107 stützt sich ein Stützring 107r ab, der zur Aufnahme des Innenrings eines Schrägkugellagers 107s bestimmt ist. Auf dem Außenring des Schrägkugellagers 107s ist der untere Abschnitt des Verbindungsabschnitts 106v drehbar abstützt. Der obere Abschnitt des Verbindungsabschnitts stützt sich über ein Radialkugellager 107a an dem Aufnahmeschaft 107 ab. Das Radialkugellager 107a liegt mit der Stirnfläche seines inneren Lagerrings auf dem oberen Absatz des Aufnahmeschafts 107 auf.

Der Scheibenläufermotor 7 ist mit einer becherförmigen Gehäuseabdeckung 110, die von dem Verbindungsabschnitt 106v zentrisch durchgriffen ist und auf der Grundplatte des Drehtischs 6 aufliegt, überdeckt. Zwischen der Gehäuseabdeckung 110 und der Außenwand des Verbindungsabschnitts 106v kann eine Dichtung vorgesehen sein, die mindestens feste Partikel zurückhält. In dem Raum zwischen der Gehäuseabdeckung 110 und der Außenwand des Verbindungsabschnitts 106v kann auch ein Überdruck eingestellt werden, der einem Fremdkörpereintritt entgegenwirkt. Zusätzlich kann in diesem Raum auch eine Kühlung, zum Beispiel durch ein entsprechendes Kühlmedium realisiert sein.

Fig. 15 zeigt nun eine Glasmaschine 9, die zur Herstellung von Formglas bestimmt ist. Die Glasmaschine 9 weist einen Glas-Feeder 8 zum Bereitstellen von Glastropfen auf, sowie einen Drehtisch 6, wie vorstehend in Fig. 11 beschrieben.

Der Glas-Feeder 8 ist im Wesentlichen wie der weiter oben in Fig. 11 beschriebene Glas-Feeder 5 aufgebaut, mit dem Unterschied, dass anstelle des Linearmotors 4 der weiter oben in Fig. 8 beschriebene Bogenmotor 3 vorgesehen ist. Der Abtrieb 82a des Bogenmotors 3 ist über einen Koppelstab 112 mit dem Verbindungsbalken 101 des Glas-Feeders 8 verbunden. Der Verbindungsbalken 101 stützt sich nun über zwei Führungsstäbe 113 über Dämpfungsglieder 113d auf einer Grundplatte der Glasmaschine 9 ab. Die Dämpfungsglieder 113d können weiter zum Gewichtsausgleich bestimmt sein. Die Führungsstäbe 113 sind in vertikalen Geradführungen 1131 geführt, bei denen es sich beispielsweise um Gleitführungen handeln kann. Der Koppelstab 112 ist an seinen beiden Endabschnitten drehbar gelagert. Er vermeidet Zwangskräfte, die bei starrer Kopplung zwischen dem bogenförmigen Abtrieb des Bogenmotors 3 und den vertikalen Geradführungen 1131 auftreten können. Es kann vorgesehen sein, die Länge des Koppelstabs 112 variabel einstellbar zu machen, so dass auf einfache Weise die Lage des Plungers 102 justierbar ist.

Der untere Endabschnitt des mit dem Verbindungsbalken 101 starr verbundenen Plungers 102 durchgreift in seiner unteren Totlage die Ausgangsöffnung 103d des mit Glasschmelze 104 gefüllten Glasschmelzebehälters 103. Der Plunger gibt in seiner oberen Totlage die Ausgangsöffnung 103d frei und gibt so Glasschmelze frei, die einen Glastropfen bildet. Der Glastropfen wird von der Glastropfen-Schere 105 abgetrennt und durch Schwerkraft in eine Glasform 111 gefördert (siehe auch Fig. 10).

Mehrere Glasformen 111 sind auf der Drehtischplatte 106 des Drehtischs 6 kreisringförmig angeordnet. Bei Drehung der Drehtischplatte wird eine gefüllte Glasform unter dem Glas-Feeder 8 fortgedreht und eine leere Glasform bereitgestellt. Weitere Baugruppen, wie beispielsweise Vorrichtungen zur Entnahme und/oder Übergabe halbfertiger oder fertiger Glasartikel, Blasvorrichtungen und dergleichen sind in Fig. 15 nicht dargestellt.

Bezugszeichenliste

| 1 | Statorsegment |
|------|---------------|
| 2 | Statorsegment |
| 3 | Bogenmotor |
| 4 | Linearmotor |
| 5 | Glas-Feeder |
| 6 | Drehtisch |
| 7 | Scheibenläufermotor |
| 8 | Glas-Feeder |
| 9 | Glasmaschine |
| 11 | Kernblech |
| 11d | Durchgangslöcher |
| 11 k | Spulenkernabschnitt |
| 11t | Kühlzahn |
| 12 | Kühlkörper |
| 12k | Kupplung |
| 12m | Kühlmittelstrom |
| 12v | Verbindungsleitung |
| 13 | Grundplatte |
| 14 | Kern |
| 14k | Spulenkern |
| 15 | Spulenwicklung |
| 16 | Hinterschneidung |
| 51 | Spannelement |
| 52 | Befestigungselement |
| 53 | Gestell |
| 61 | Spannelement |
| 62 | Befestigungselement |

| | |
|---|---|
| 63 | Gestell |
| 81 | Stator |
| 82 | Läufer |
| 82a | Abtrieb |
| 82p | Permanentmagnet |
| 82t | Trägerplatte |
| 83 | Führungsbahn |
| 91 | Stator |
| 92 | Läufer |
| 92a | Abtrieb |
| 92p | Permanentmagnet |
| 93 | Führungsbahn |
| 101 | Verbindungsbalken |
| 102 | Plunger |
| 103 | Glasschmelzebehälter |
| 103d | Ausgangsöffnung |
| 104 | Glasschmelze |
| 105 | Glastropfen-Schere |
| 106 | Drehtischplatte |
| 106v | Verbindungsabschnitt |
| 107 | zentraler Aufnahmeschaft |
| 107a | Radialkugellager |
| 107r | Stützring |
| 107s | Schrägkugellager |
| 108 | Scheibenläufer-Rotor |
| 108p | Permanentmagnet |
| 109 | Scheibenläufer-Stator |
| 110 | Gehäuseabdeckung |
| 111 | Glasform |

## Patentansprüche

**1.** Glasmaschine mit einer Glasschmelzezufuhrvorrichtung, vorzugsweise Glas-Feeder genannt, mit einem Glasschmelzebehälter (103) mit einer Ausgangsöffnung (103d) und einem durch diese auf- und abbewegten Kolben (102), vorzugsweise Plunger genannt, wobei der Kolben (102) mit einem elektrischen Antriebsmotor (3, 4) verbunden ist und ggf. ein Drehtisch (6) mit Glasformen (111) oder anderen Bearbeitungsvorrichtungen unmittelbar oder mittelbar dem Glasschmelzebehälter (103) nachgeschaltet ist, wobei dieser Drehtisch (6) zur Drehbewegung mit einem elektrischen Antriebsmotor (3, 4; 7) verbunden ist, wobei vorgesehen ist, dass der elektrische Antriebsmotor (3, 4; 7) des Kolbens (102) und/oder des Drehtischs (6) als Direktantrieb ausgebildet ist,
**dadurch gekennzeichnet,**
**dass** der Stator des elektrischen Antriebsmotors aus mindestens einem Statorsegment (1, 2) gebildet ist, das einen weichmagnetischen Kern (14) und eine oder mehrere in Nuten angeordnete Spulenwicklungen aufweist,
**dass** der Kern (14) mindestens ein parallel zu den Nuten angeordnetes Durchgangsloch (11d) aufweist, das von einer Kühleinrichtung (12) durchgriffen ist, die als von einem Kühlmittel durchströmter und/oder umströmter Körper ausgebildet ist und einen Abschnitt eines von dem Kühlmittel (12m) durchströmten Wärmetauschers bildet,
**dass** die Kühleinrichtung (12) eine Fixierungseinrichtung für den Kern (14) darstellt, und
**dass** der Kern (14) Spulenkerne (14k) aufweist, die durch die Nuten voneinander getrennt sind, wobei der Abstand zum äußeren Rand des mindestens einen Durchgangsloches (11d) von der Fußpunktlinie der Nuten im Bereich der 0,2fachen bis 10fachen Breite der Spulenkerne (14k) liegt.

**2.** Glasmaschine nach Anspruch 1,
**dadurch gekennzeichnet,**
**dass** der Abstand zum äußeren Rand des mindestens einen Durchgangloches (11d) von der Fußpunktlinie der Nuten im Bereich der 0,5fachen bis 2fachen, vorzugsweise 0,8fachen bis 1fachen Breite der Spulenkerne (14k) liegt.

**3.** Glasmaschine nach Anspruch 1 oder 2,
**dadurch gekennzeichnet,**
**dass** der Kern (14) n Spulenkerne (14k) und m Durchgangslöcher (11d) mit Kühleinrichtung (12) aufweist, wobei n größer oder gleich m ist.

**4.** Glasmaschine nach Anspruch 3,
**dadurch gekennzeichnet,**
**dass** das Verhältnis von n zu m in einem Bereich von 2 bis 1, vorzugsweise bei 1,5 liegt.

**5.** Glasmaschine nach einem der vorangehenden Ansprüche,
**dadurch gekennzeichnet,**
**dass** die Querschnittsfläche des Durchgangsloches (11d) einen Durchmesser aufweist, der gleich ist wie die Breite des Spulenkerns (14k) oder maximal 50 % größer oder kleiner ist als die Breite des Spulenkerns (14k).

**6.** Glasmaschine nach einem der vorangehenden Ansprüche,
**dadurch gekennzeichnet,**
**dass** der Kern (14) das Gehäuse des Statorsegments (1, 2) bildet.

**7.** Glasmaschine nach einem der vorangehenden Ansprüche,
**dadurch gekennzeichnet,**
**dass** der Kern (14) auf der Fühleinrichtung (12) durch Kraftschluss oder Stoffschluss fixiert ist.

**8.** Glasmaschine nach einem der vorangehenden Ansprüche,
**dadurch gekennzeichnet,**
**dass** die Mantelfläche der Kühleinrichtung (12) mindestens abschnittsweise mit Übermaß zu dem korrespondierenden Innenmaß des Durchgangslochs (11d) ausgebildet ist.

9. Glasmaschine nach einem der vorangehenden Ansprüche,
   **dadurch gekennzeichnet,**
   **dass** der Teilungsabstand mindestens zweier Durchgangslöcher (11d) ungleich dem Teilungsabstand der mit den zwei Durchgangslöchern (11d) zusammenwirkenden Kühleinrichtungen (12) ist.

10. Glasmaschine nach einem der vorangehenden Ansprüche,
    **dadurch gekennzeichnet,**
    **dass** zwischen der Innenwand des Durchgangslochs und der Außenwand der Fühleinrichtung mindestens ein Durchströmungsraum für das Kühlmittel ausgebildet ist.

11. Glasmaschine nach einem der vorangehenden Abschnitte,
    **dadurch gekennzeichnet,**
    **dass** die Kühleinrichtungen (12) aus Kupfer, Aluminium oder Stahl ausgebildet sind.

12. Glasmaschine nach einem der vorangehenden Ansprüche,
    **dadurch gekennzeichnet,**
    **dass** der Kern (14) aus übereinander angeordneten Kemblättern oder-platten, vorzugsweise Kernblechen (11) ausgebildet ist.

13. Glasmaschine nach einem der Ansprüche 1 bis 11,
    **dadurch gekennzeichnet,**
    **dass** der Kern (14) aus einem Kunststoffmaterial gebildet ist, in das weichmagnetische Partikel eingebettet sind.

14. Glasmaschine nach einem der Ansprüche 1 bis 11,
    **dadurch gekennzeichnet,**
    **dass** der Kern (14) aus einem weichmagnetischen keramischen Material gebildet ist.

15. Glasmaschine nach einem der vorangehenden Ansprüche,
    **dadurch gekennzeichnet,**
    **dass** der elektrische Antriebsmotor ein Linearmotor, Bogenmotor oder Rotationsmotor ist.

**Claims**

1. Glass machine having a molten glass supply device, preferably being a glass feeder, having a molten glass container (103) with a discharge opening (103d) and a piston (102) moved back and forth through said opening, this piston preferably being a plunger, wherein the piston (102) is connected to an electrical drive motor (3, 4) and, if necessary, a rotary table (6) having glass shapes (111) or other processing devices is connected directly or indirectly downstream of the molten glass container (103), wherein this rotary table (6) is connected to an electrical drive motor (3, 4; 7) for rotational movement, wherein provision is made for the electrical drive motor (3, 4; 7) of the piston (102) and/or of the rotary table (6) to be designed as direct drive,
   **characterised in that**,
   the stator of the electrical drive motor is formed from at least one stator segment (1, 2), which has a magnetically soft core (14) and one or more coil windings arranged in grooves, **in that** the core (14) has at least one through hole (11d) arranged parallel to the grooves, which is clamped down by a cooling device (12), which is formed as a body that is flowed through and/or around by a coolant, and which forms a section of a heat exchanger that is flowed through by the coolant (12m),
   **in that** the cooling device (12) represents a fixing unit for the core (14), and
   **in that** the core (14) has coil cores (14k), which are separated from one another by the grooves, wherein the gap to the outer edge of the at least one through hole (11d) from the base point line of the grooves is in the range of 0.2-times to 10-times the width of the coil cores (14k).

2. Glass machine according to claim 1,
   **characterised in that**,
   the gap to the outer edge of the at least one through hole (11d) from the base point line of the grooves is in the range of 0.5-times to 2-times, preferably 0.8-times to 1-times the width of the coil cores (14k).

3. Glass machine according to claim 1 or 2,
   **characterised in that**,
   the core (14) has n coil cores (14k) and m through holes (11d) with a cooling device (12), wherein n is greater than or the same as m.

4. Glass machine according to claim 3,
   **characterised in that**,
   the ratio of n to m is in a range of 2 to 1, preferably 1.5.

5. Glass machine according to one of the preceding claims,
   **characterised in that**,
   the cross-sectional surface of the through hole (11d) has a diameter that is the same as the width of the coil core (14k) or 50% maximum greater or smaller than the width of the coil core (14k).

6. Glass machine according to one of the preceding claims,
   **characterised in that**,
   the core (14) forms the housing of the stator segment (1, 2).

**7.** Glass machine according to one of the preceding claims,
**characterised in that**,
the core (14) is fixed to the cooling device (12) by traction or adhesive bonding.

**8.** Glass machine according to one of the preceding claims,
**characterised in that**,
the lateral surface of the cooling device (12) is formed at least in sections with an excess over the corresponding internal dimension of the through hole (11d).

**9.** Glass machine according to one of the preceding claims,
**characterised in that**,
the distance of separation of at least two through holes (11d) is unequal to the distance of separation of cooling devices (12) that interact with the two through holes (11d).

**10.** Glass machine according to one of the preceding claims,
**characterised in that**,
at least one through-flow space for the coolant is formed between the inner wall of the through hole and the outer wall of the cooling device.

**11.** Glass machine according to one of the preceding claims,
**characterised in that**,
the cooling devices (12) are formed from copper, aluminium or steel.

**12.** Glass machine according to one of the preceding claims,
**characterised in that**,
the core (14) is formed from core sheets or plates arranged above one another, preferably core laminations (11).

**13.** Glass machine according to one of claims 1 to 11,
**characterised in that**,
the core (14) is formed from a plastic material, into which magnetically soft particles are embedded.

**14.** Glass machine according to one of claims 1 to 11,
**characterised in that**,
the core (14) is formed from a magnetically soft ceramic material.

**15.** Glass machine according to one of the preceding claims,
**characterised in that**,
the electrical drive motor is a linear motor, curved motor or rotation motor.

**Revendications**

**1.** Machine de fabrication de verre dotée d'un dispositif d'alimentation de verre en fusion, appelé de préférence chargeur de verre, avec un récipient de verre en fusion (103) doté d'une ouverture de sortie (103d) et d'un piston (102) montant et descendant au travers de celle-ci, appelé de préférence plongeur, le piston (102) étant relié à un moteur d'entraînement électrique (3, 4) et une table rotative (6) avec des moules de verre (111) ou autres dispositifs de traitement étant éventuellement disposée directement ou indirectement en aval du récipient de verre en fusion (103), cette table rotative (6) étant reliée pour le mouvement rotatif à un moteur d'entraînement électrique (3, 4 ; 7), étant prévu que le moteur d'entraînement électrique (3, 4, ; 7) du piston (102) et/ou de la table rotative (6) soit réalisé comme un entraînement direct,
**caractérisée en ce que** le stator du moteur d'entraînement électrique est constitué d'au moins un segment de stator (1, 2) qui présente un noyau magnétique doux (14) et un ou plusieurs enroulements de bobine disposés dans des rainures, **en ce que** le noyau (14) présente au moins un trou débouchant (11d) qui est disposé parallèlement aux rainures et est traversé par un dispositif de refroidissement (12) qui est réalisé sous la forme d'un corps traversé et/ou contourné par un agent de refroidissement et forme une section d'un échangeur de chaleur traversé par l'agent de refroidissement (12m), **en ce que** le dispositif de refroidissement (12) constitue un dispositif de fixation pour le noyau (14) et
**en ce que** le noyau (14) présente des noyaux de bobine (14k) séparés les uns des autres par les rainures, la distance entre le bord extérieur d'au moins un trou débouchant (11d) et la ligne de base des rainures étant comprise entre 0,2 et 10 fois la largeur des noyaux de bobine (14k).

**2.** Machine de fabrication de verre selon la revendication 1,
**caractérisée en ce**
**que** la distance entre le bord extérieur d'au moins un trou débouchant (11d) et la ligne de base des rainures est comprise entre 0,5 et 2 fois, de préférence 0,8 et 1 fois la largeur des noyaux de bobine (14k).

**3.** Machine de fabrication de verre selon la revendication 1 ou 2,
**caractérisée en ce**
**que** le noyau (14) présente n noyaux de bobine (14k) et m trous débouchants (11d) avec un dispositif de refroidissement (12), n étant plus grand ou égal à m.

**4.** Machine de fabrication de verre selon la revendication 3,
**caractérisée en ce**
**que** le rapport entre n et m est compris dans une plage entre 2 et 1, de préférence s'élève à 1,5.

**5.** Machine de fabrication de verre selon l'une quelconque des revendications précédentes,
**caractérisée en ce**
**que** l'aire de section du trou débouchant (11d) présente un diamètre qui est égal à la largeur du noyau de bobine (14k) ou est supérieur ou inférieur de 50 % au maximum à la largeur du noyau de bobine (14k).

**6.** Machine de fabrication de verre selon l'une quelconque des revendications précédentes,
**caractérisée en ce**
**que** le noyau (14) forme le boîtier du segment de stator (1, 2).

**7.** Machine de fabrication de verre selon l'une quelconque des revendications précédentes,
**caractérisée en ce**
**que** le noyau (14) est fixé sur le dispositif de refroidissement (12) à force ou par liaison de matière.

**8.** Machine de fabrication de verre selon l'une quelconque des revendications précédentes,
**caractérisée en ce**
**que** la surface enveloppe du dispositif de refroidissement (12) est réalisée au moins par section avec une surmesure par rapport à la mesure intérieure correspondante du trou débouchant (11d).

**9.** Machine de fabrication de verre selon l'une quelconque des revendications précédentes,
**caractérisée en ce**
**que** l'écartement d'au moins deux trous débouchants (11d) n'est pas égal à l'écartement des dispositifs de refroidissement (12) coagissant avec les deux trous débouchants (11d).

**10.** Machine de fabrication de verre selon l'une quelconque des revendications précédentes,
**caractérisée en ce**
**qu'**au moins un espace de passage pour l'agent de refroidissement est réalisé entre la paroi intérieure du trou débouchant et la paroi extérieure du dispositif de refroidissement.

**11.** Machine de fabrication de verre selon l'une quelconque des revendications précédentes,
**caractérisée en ce**
**que** les dispositifs de refroidissement (12) sont réalisés en cuivre, aluminium ou acier.

**12.** Machine de fabrication de verre selon l'une quelconque

que des revendications précédentes,
**caractérisée en ce**
**que** le noyau (14) est réalisé en lames ou plaques de noyau disposées les unes au-dessus des autres, de préférence en tôles de noyau (11).

**13.** Machine de fabrication de verre selon l'une quelconque des revendications 1 à 11,
**caractérisée en ce**
**que** le noyau (14) est constitué d'un matériau plastique, dans lequel sont intégrées des particules magnétiques douces.

**14.** Machine de fabrication de verre selon l'une quelconque des revendications 1 à 11,
**caractérisée en ce**
**que** le noyau (14) est constitué d'un matériau céramique magnétique doux.

**15.** Machine de fabrication de verre selon l'une quelconque des revendications précédentes,
**caractérisée en ce**
**que** le moteur d'entraînement électrique est un moteur linéaire, un moteur à arc ou un moteur rotatif.

**Fig. 1a**

**Fig. 1b**

**Fig. 1c**

**Fig. 2**

**Fig. 3a**

**Fig. 3b**

Fig. 4a

Fig. 4b

Fig. 4c

2

15

12

14

**Fig. 5**

51
12
2
51
52

52
53

**Fig. 6a**

51
2
15

53
12
14

**Fig. 6b**

2

12

61

62
62

63

**Fig. 7a**

2

12

15

61

63

**Fig. 7b**

**Fig. 8**

**Fig. 9**

**Fig. 10**

**Fig. 11**

**Fig. 12**

**Fig. 13**

*Fig. 14*

Fig. 15

**EP 2 165 983 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1037859 B1

- WO 0039037 A